# EUROPÄISCHE PATENTSCHRIFT

(11) **EP 1 226 051 B1**
(45) Veröffentlichungstag und Bekanntmachung des Hinweises auf die Patenterteilung: **07.01.2004**
(21) Anmeldenummer: 00972777.7
(22) Anmeldetag: 16.10.2000
(51) Int. Cl.: B60R 25/10, G08B 25/10, G08G 1/123

(54) **MOBILE STRECKENÜBERWACHUNGSEINHEIT**
MOBILE ROUTE MONITORING UNIT
UNITE MOBILE DE SURVEILLANCE DE L'ITINERAIRE

(30) Priorität: 14.10.1999 DE 19949622
(43) Veröffentlichungstag der Anmeldung: 31.07.2002
(73) Patentinhaber: Asam, Robert, 85399 Hallbergmoos (DE)
(72) Erfinder: ASAM, Robert, 85399 Hallbergmoos (DE); BAUCH, Horst, H., 82008 Unterhaching (DE)
(74) Vertreter: Winter, Brandl, Fürniss, Hübner, Röss, Kaiser, Polte, Partnerschaft
(86) Internationale Anmeldenummer: PCT/EP2000/010175
(87) Internationale Veröffentlichungsnummer: WO 2001/026940

(56) Entgegenhaltungen:
- GB-A- 2 281 141
- US-A- 5 068 656
- US-A- 5 751 245

## Beschreibung

Die Erfindung betrifft eine mobile Streckenüberwachungseinheit, insbesondere zur Verwendung in einem LKW.

Jede Spedition steht vor der Schwierigkeit, den gegenwärtigen Aufenthal tsort ihrer LKWs bzw. ihrer Transportlast mit einer geplanten Route und Zeitplan zu vergleichen. Dies ist notwendig, um eine evtl. Verspätung oder gar Diebstahl bzw. Entführung so früh wie möglich festzustellen.

Dabei wurde in Erwägung gezogen, daß eine im LKW installierte Sendeeinheit nach bestimmten Zeit- oder Entfernungsintervallen aktuelle Positionsinformation, die über einen GPS-Empfänger oder einen Gyrosensor bestimmt werden, an eine Zentrale meldet. Die Übermittlung der Information kann dabei über den SMS-Dienst (Short Message Service) der mobilen Telefonnetze stattfinden, da die Kosten für Mitteilungen über den SMS-Dienst im Vergleich zur Mitteilungen über den Sprachkanal des mobilen Telefonnetzes erheblich günstiger ausfallen. Die Positionsmeldung kann in der Zentrale in einem zentralen Computer verarbeitet bzw. mit den geplanten Strecken- und Zeitplandaten verglichen werden, der im Falle einer Streckenabweichung Alarm auslöst.

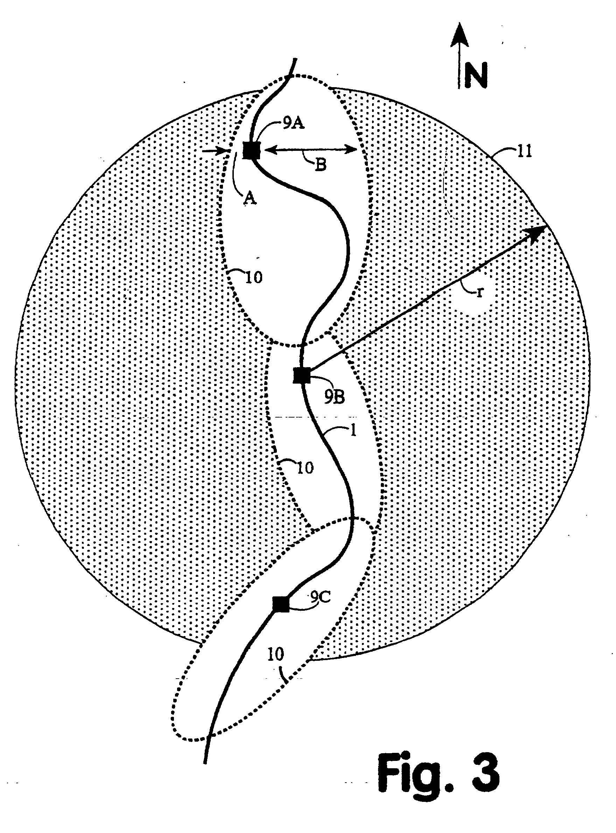

Zur Bestimmung einer Streckenabweichung kann ein System der "erlaubten Flächen" benutzt werden, bei dem die geplante Route als Aneinanderreihung von Ellipsen dargestellt wird, die die geplante Route samt geringen lateralen Abweichungen abdecken. Ein Aufenthalt außerhalb der "erlaubten", aneinandergereihten Ellipsen gilt dementsprechend als Streckenabweichung. Eine solche Darstellungsart einer Strecke ist in Fig. 3 beispielhaft abgebildet.

Figur 3 zeigt eine Strecke 1 sowie mehrere Ellipsen 10, die die Strecke abdecken und zusammen einen großzügigen, "erlaubten Streckenkorridor" festlegen. Dabei wird über ei n Kilometerzähler im LKW die gefahrene Strecke gemessen und in regelmäßigen Abständen, beispielsweise alle 10 km, eine Positionsmeldung an die Zentrale per SMS-Dienst übermittelt. Solche Meldungen an die Zentrale sind in der Figur durch die Meldepunkte 9A, 9B und 9C dargestellt.

Bei einem solchen System müssen jedoch Bestätigungssignale in regulären Abständen vom LKW abgeschickt werden, was zu hohen Kosten führt. Insbesondere trifft dies bei Auslandsreisen zu, da SMS-Mitteilungen aus dem Ausland wesentlich teurer als Inlandsmitteilungen sind. Aus diesem Grund werden die Abstände zwischen Bestätigungssignalen eher groß gehalten. Dies wiederum führt zu einer erheblichen Vergrößerung des momentanen wahrscheinlichen Aufenthaltsgebiets, da dieses quadratisch mit dem Abstand zwischen den Meldepunkten ansteigt. Dieses Phänomen ist auch in Fig. 3 durch den Kreis 11 schematisch dargestellt. Kreis 11 hat einen Radius r, beispielsweise 10 km, um den Meldepunkt 9B. Die schattierte Fläche des Kreises 11 stellt somit diejenige "unerlaubte" Fläche dar, in der sich ein Fahrzeug aufhalten könnte, das sich beim Meldepunkt 9B noch planmäßig auf der Strecke bewegte. Überhaupt ergibt eine Streckendarstellung über "erlaubten" elliptischen Flächen einen ungleichmäßigem Streckenkorridor, der sehr unterschiedliche Abweichungen zuläßt bzw. verbietet. Beispielsweise ist in Fig. 3 die erlaubte Abweichung A vom Meldepunkt 9A in Richtung Westen (Norden wird in Fig. 3 in kartographisch üblicher Form angedeutet) erheblich kleiner als die erlaubten Abweichung B vom Meldepunkt 8A in Richtung Osten.

Daß der SMS-Dienst gegenwärtig auf nur ca. 40% der gesamteuropäischen Fläche verfügbar ist, führt zu einer weiteren, erheblichen Einschränkung der Überwachungsmöglichkeit.

Darüber hinaus ist aus der US-Schrift US 5,751,245 A1 noch ein ein Fahrzeugrouten- und -zeitplanabweichungs-Benachrichtigungssystem bekannt, bei dem an festgelegten Zeitpunkten Ti jeweils die Ist-Position Si (ermittelt beispielsweise über GPS) mit der abgespeicherten Soll-Position Si' verglichen und vom fahrzeugeigenen Sender an die Zentrale zurückgemeldet wird, wenn ein festgelegter Abstand zwischen Si und Si' aufgetreten ist (vgl. Sp. 5, Z.36 - 56). Die Messung ist dabei zeitabhängig und setzt daher zwingend eine Zeiterfassung (zur Bestimmung von Ti) voraus. Es wird somit eigentlich überwacht, ob ein bestimmter Zeitplan eingehalten wird, und weniger, ob von einer Strecke abgewichen wird. Im Speicher liegen dazu Zeitpunkt-Ortspunkt-Wertepaare, d.h. zeitplanerfasste Orte vor. Dabei wird optional vorgeschlagen, zusätzlich zur Abbildung der vorgegebenen Strecke als Punkte zu jedem Punkt ein Streckensegment Li' als Punktpaar abzuspeichern, wobei aber immer ein zusätzlicher Zeitwert benötigt wird, der zusammen mit den örtlichen Daten abgespeichert werden muss.

Als nächstkommender Stand der Technik wird das System zur Überwachung und Meldung der außerhalb einer Route liegenden Fahrkilometer für lange Förderfahrzeuge gemäß US 5,068,656 A angesehen. Dort wird eine mobile Streckenüberwachungseinheit vorgeschlagen, die einen Datenspeicher zum Speichern von vorbestimmten Streckendaten mit Toleranzdaten aufweist, einen Positionsgeber zur Positionsbestimmung der mobilen Streckenüberwachungseinheit, einen Prozessor zum Feststellen von eventuellen Strerckenabweichungen zwischen dem durch die Streckendaten definierten Streckenverlauf und der aktuellen Position der Streckenüberwachungseinheit und einen Sender, der im Falle einer Streckenabweichung eine Meldung an eine Zentrale aussendet. Als streckenangepasste Toleranzgrenzen werden dabei variable Rechtecke abgespeichert. Diese Rechtecke müssen in Bezug zu einem zugrundeliegenden, die Geographie wiedergebenden Koordinatensystem gesetzt werden, was zu einem beträchtlichen Aufwand beim Abspeichern und bei der Berechnung der Streckenabweichung führen kann, insbesondere dann, wenn die Rechtecke aus den orthogonalen Richtungen heraus gedreht werden, um die Genauigkeit der Toleranzdaten zu erhöhen.

Dementsprechend i st es ei ne Aufgabe der Erfindung, die bekannte Streckenüberwachung weiterzubilden und die unten beschriebenen Vorteile zu erzielen.

Zur Erfüllung dieser Aufgabe sieht die Erfindung eine mobile Steckenüberwachungseinheit gemäß Anspruch 1 vor. Bevorzugte Ausführungsbeispiele der Erfindung sind in den Unteransprüchen definiert.

Die Erfindung umfaßt vier wesentliche Vorrichtungs-Elemente, die zusammen eine mobile Streckenüberwachungseinheit bilden:
- einen Datenspeicher, der vorbestimmten Streckendaten speichert;
- einen Positionsgeber, der die Position der mobile Streckenüberwachungseinheit bestimmt;
- einen Prozessor, der evtl. Streckenabweichungen zwischen dem durch die Streckendaten definierten Streckenverlauf und der aktuellen Position der Einheit feststellt; und
- einen Sender, der im Falle einer Streckenabweichung eine Meldung an eine Zentral aussendet.

Die erfindungsgemäße Streckenüberwachungseinheit speichert Streckendaten in dem dafür vorgesehenen Datenspeicher. Die Streckendaten geben die geplante, freigegebene Strecke bzw. Streckenverlauf in einer Art wieder, die einen Vergleich dieser mit den vom Positionsgeber gewonnenen Positionsdaten ermöglicht. Diese Positionsdaten spiegeln die aktuelle Position der ggf. an einem Träger montierten Streckenüberwachungseinheit wider. Der Vergleich findet in der Streckenüberwachungseinheit im dafür vorgesehenen Prozessor statt.

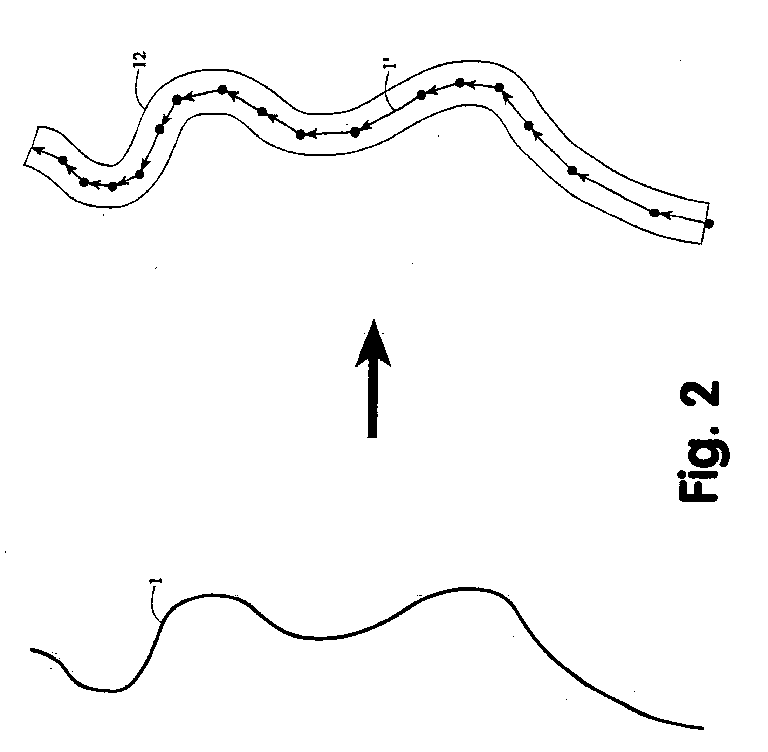

Erfindungsgemäß wird die Strecke dabei als Aneinanderreihung von Koordinatenpunkten und zugehörigen Vektoren dargestellt. Dementsprechend bestehen die Streckendaten aus paarweise auftretenden Vektorendaten und Koordinatendaten, wobei die Koordinatendaten denen des GPS gleichen oder ähneln können. Eine solche Streckendarstellung ist in der Figur 2 gezeigt. Beispielsweise zeigt der zugehörige Vektor eines Koordinatenpunkts auf den nächsten Koordinatenpunkt der dargestellten Strecke. Es ist vorteilhaft, die Koordinatenpunkte nah aneinander zu legen, um eine präzise Streckenwiedergabe und somit eine schnelle Erkennung einer evtl. Abweichung zu gewährleisten. Entsprechend dem Streckenverlauf können jedoch die Koordinatenpunkte unterschiedlich weit auseinander liegen. Bei der erfindungsgemäßen Vektordarstellung der Strecke können bei geraden Strecken di e Koordinatenpunkte weiter auseinanderliegen als bei kurvigen Strecken, ohne daß die Genauigkeit der Streckenwiedergabe benachteiligt wird. Durch eine solche Reduzierung der Anzahl der Streckendaten kann der Datenspeicher der Streckenüberwachungseinheit optimal ausgenutzt werden.

Eine Abweichung von der Strecke wird senkrecht vom nächstliegenden Streckenvektor bzw. ggf. als Radius von der nächstliegenden Streckenkoordinate gemessen. Die zulässige Abweichung ist abhängig vom Streckenabschnitt bzw. der Strecke. Die Streckendaten werden zusätzlich mit Toleranzdaten gespeichert, die diese zulässige Streckenabweichung der Streckenabschnitte bestimmen. Somit kann beispielsweise die Streckentoleranz in einem kurvenreichen Abschnitt vergrößert werden, um die für die Streckendarstellung notwendige Anzahl von Koordinatenpunkten zu reduzieren.

Obwohl die Elemente der Erfindung eine Einheit bilden, muß dies nicht zwangsmäßig im physikalischen Sinne erfolgen. Jeweilige Elemente der Erfindung können ggf. auch als separate Module erfaßt sein, die elektrisch miteinander zur Einheit verbunden sind. Bevorzugterweise ist die Streckenüberwachungseinheit an bzw. in einem Träger fest, ggf. unlösbar, befestigt, dessen Position überwacht werden soll, beispielsweise ein LKW, Container, Flugzeuge, Schiff, o.Ä.,.

Die Zusammenfassung der obigen Elemente zur mobilen Einheit ermöglicht eine autarke Streckenüberwachung, die dementsprechend vor Ort, d.h. beim Träger, erfolgen kann . Di e Notwendi gkei t , Kosten verursachende Signale in regulären Abständen auszusenden, entfällt. Eine Streckenabweichung wird jedoch zügigst festgestellt und durch das Senden eines Signals an eine Zentrale sicher gemeldet.

Da Signale nicht in regulären Abständen ausgesendet werden müssen, ist es möglich, einen Sender zu verwenden, bei dem die Übertragungskosten eine untergeordnete Rolle und die Übertragungsqualität bzw. -verfügbarkeit eine übergeordnete Rolle spielen. Ein solcher Sender (ggf. unter Einbezug eines entsprechenden Empfängers, auch wenn im Folgenden nur vom "Sender" gesprochen wird, da der Unterschied für den Fachmann erkennbar ist) kann auch weitere Kommunikationsdienste zwischen dem Träger der mobilen Einheit bzw. einer diesem Träger zugeordneten Person oder Vorrichtung (beispielsweise Fahrer, Kapitän, Motor oder Steuereinrichtung) und der Zentrale oder einer anderen Stelle übernehmen. Zum Beispiel könnte nach Bedarf über den Sender ein Sprachkanal zwischen einem Fahrer bzw. Fahrerhaus und einer Zentrale aufgebaut werden. Im Falle einer auffälligen Streckenabweichung könnte dies dazu verwendet werden, von einer Zentrale aus eine im Fahrerhaus unbemerkbare Tonüberwachung des Fahrerhauses zu gestattet. Gleichfalls könnte über eine Tastatur- bzw. Anzeigevorrichtung in Zusammenhang mit dem Sender eine Textmitteilung zwischen einem Fahrer und einer Zentrale übermittelt werden. Auch ein sonstiger Austausch von Bild-, Betriebs- und/oder Informationsdaten ist über den Sender möglich. Somit können Steuerbefehle empfangen werden, die für die Streckenüberwachungseinheit, den Träger oder eine dem Träger zugeordneten Vorrichtung bestimmt sind. Ein Steuerbefehl an die Fahrzeugelektronik eines LKWs könnte beispielsweise dazu dienen, das Fahrzeug im Falle eines Diebstahls oder Entführung außer Betrieb zu setzen. Ein Steuerbefehl an die Streckenüberwachungseinheit könnte zur Aktualisierung der im Datenspeicher gespeicherten Streckendaten dienen.

Bevorzugterweise findet die Aufbereitung der Streckendaten aus dem geplanten Streckenverlauf in einer externen Vorrichtung unter Verwendung einer physikalischen oder elektronisch gespeicherten Land- bzw. Seekarte statt, beispielsweise im PC in der Zentrale. Die Streckendaten können dann gemäß dem Fachmann geläufigen Methoden, beispielsweise per Funkmodem, per Richtfunk, über den Sender oder ein Kabel, in den Datenspeicher der Streckenüberwachungseinheit übertragen werden. Der Fachmann wiegt dabei zwischen Bequemlichkeit, Verfügbarkeit und Investitionskosten ab. Eine Verbindung über Kabel ist günstig und läßt sich deshalb an vielen Stellen einrichten. Eine Verbindung über Funk beispielsweise läßt eine bequemere Datenübertragung zu. Zum Zwecke einer Aktualisierung der Streckendaten könnte die erfindungsgemäße Streckenüberwachungseinheit aber auch über ein Lesegerät verfügen, das das Lesen eines wechselbaren Speichermediums, beispielsweise eine CD, ein Floppy, eine Speicherkarte o.Ä., gestattet, auf dem Streckendaten gespeichert sind.

Es ist jedoch auch im Sinne der Erfindung, daß ein Wiederaufrufen bzw. eine Aufbereitung bzw. eine Berechnung der Streckendaten innerhalb der Einheit erfolgen könnte, beispielsweise anhand von Start- und Zielortsdaten, die über eine Tastatur oder sonstige Eingabevorrichtung angegeben worden sind. Eine solche Ausführungsform ist insbesondere dann sinnvoll, wenn die Route wiederholt entlang bestimmten Strecken oder Streckenabschnitten verläuft. Eine Aktualisierung der Streckendaten kann jederzeit erfolgen, findet aber bevorzugterweise dann statt, wenn der Träger der Streckenüberwachungseinheit sich in einem Verladehof befindet. Ggf. findet die Aktualisierung per Funkmodem statt, der eine beschränkte Reichweite hat und dessen Frequenz und Sendeleistung sich in einem ohne separate Anmeldung allgemein zugelassenen Bereich befinden.

Erfindungsgemäß umfaßt die Streckenüberwachungseinheit auch einen Positionsgeber, der die aktuelle Position der Streckenüberwachungseinheit bestimmt. Bevorzugterweise dient ein GPS-Empfänger (GPS = Global Positioning System) als Positionsgeber, obwohl andere dem Fachmann bekannte positionsbestimmende Vorrichtungen ebenfalls diesen Zweck erfüllen können, beispielsweise eine Rad-, Beschleunigungs- oder. Gyrosensorauswertung, o.Ä. Es kann auch vorteilhaft sein, die Position der Streckenüberwachungseinheit durch ein redundantes System zu ermittelt, das aus mehreren positionsbestimmenden Vorrichtungen besteht und bei dem die Ergebnisse der positionsbestimmenden Vorrichtungen gegenseitig abgeglichen werden, um ggf. die Ortungsgenauigkeit zu erhöhen.

Durch die Integration einer Zeitmeßvorrichtung in die erfindungsgemäße Streckenüberwachungseinheit erlaubt letztere nicht nur eine Überwachung der Streckeneinhaltung nach räumlichen Kriterien sondern auch nach zeitlichen. Insbesondere kann Zeitinformation zu den Streckendaten gespeichert werden, die angibt, wann bestimmte Koordinatenpunkte frühestens bzw. spätestens erreicht werden sollen. Zudem können die Daten aus der Zeitmeßvorrichtung dazu verwendet werden, um die Geschwindigkeit der Streckenüberwachungseinheit zu bestimmen. Durch solche Maßnahmen kann beispielsweise sichergestellt werden, daß ein Lieferzeitplan eingehalten wird, ohne daß gesetzliche Vorgaben bzgl. Geschwindigkeit, Pausen u.ä. mißachtet werden. Auch Pannen und unerlaubte Halte können somit festgestellt werden.

Die Erfindung kann auch als System ausgeführt werden, das zu der oben beschriebenen Streckenüberwachungseinheit auch weitere Komponenten umfaßt, die von der Streckenüberwachungseinheit räumlich getrennt sind.

Beispielsweise kann ein solches System die oben erwähnte externe Vorrichtung zur Eingabe bzw. Aufbereitung der Streckendaten oder einem dem Sender zugeordneten Empfänger bzw. Empfänger/Sende-Vorrichtung umfassen.

Die Erfindung wird nachstehend anhand eines Ausführungsbeispiels unter Bezugnahme auf die Zeichnungen näher beschrieben. Es zeigen:
- Fig. 1: Eine Streckenüberwachungseinheit gemäß einem ersten Ausführungsbeispiel;
- Fig. 2: eine Streckendarstellung gemäß einem bevorzugten Ausführungsbeispiel der Erfindung;
- Fig. 3: eine Streckenüberwachung gemäß dem Stande der Technik.

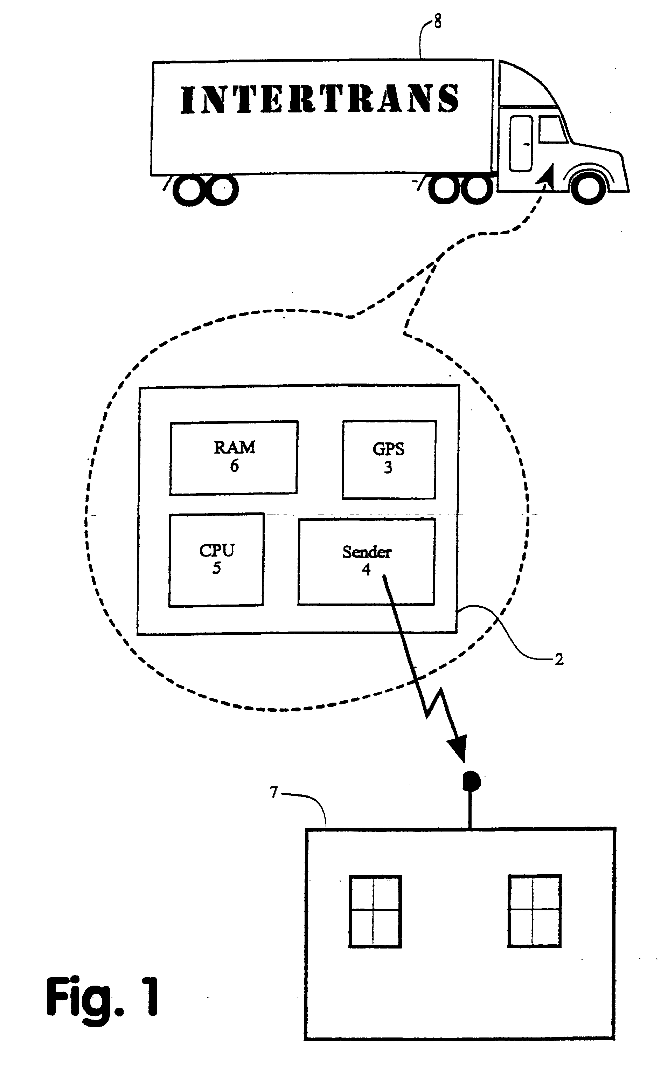

Die Figur 1 zeigt eine erfindungsgemäße Streckenüberwachungseinheit 2 mit einem Speicher 6, einem Positionsgeber 3, einem Prozessor 5 und einem Sender 4, der ggf. Daten an eine Zentrale 7 funkt. Gemäß dem ersten Ausführungsbeispiel wird die Position der Streckenüberwachungseinheit durch einen GPS-Empfänger 3 als Positionsgeber bestimmt; Streckendaten werden in einem RAM 6 (RAM = "random access memory", d.h. ein Speicher mit wahlfreiem Zugriff) gespeichert und in einer CPU 5 (CPU = "central processing unit", d.h. zentrale Verarbeitungseinheit bzw. Zentralprozessor) verarbeitet. Die Streckenüberwachungseinheit 2 wird gemäß dem ersten Ausführungsbeispiel in das Fahrerhäuschen eines LKWs 8 eingebaut.

Gemäß einem bevorzugten Ausführungsbeispiel der Erfindung wird eine geplante Fahrstrecke 1 durch Vektordaten wiedergeben, die als Streckendaten in dem Speicher 6 der Streckenüberwachungseinheit 2 gespeichert werden. Wie in Figur 2 schematisch dargestellt wird, können die einzelnen Vektoren, die in der Figur 2 jeweils durch einen Punkt und ein Pfeil graphisch angedeutet sind, derart gespeichert bzw. aneinandergereiht werden, daß sie eine Streckennachbildung 1' der eigentlichen geplanten Strecke 1 definieren. Dabei stellen die Punkte die obenerwähnten Koordinatenpunkte und die Pfeile die jeweilig zugehörigen Vektoren dar.

Das Nachbilden der Strecke 1 innerhalb der Streckenüberwachungseinheit 2 hat vor allem den Vorteil, daß die aktuelle Position der Streckenüberwachungseinheit 2 bzw. ihres Trägers 8 oft oder gar stetig überprüft werden kann, ohne hohe Kommunikationskosten zu verursachen. Somit kann vermieden werden, daß die Streckenüberwachungseinheit 2 einen engen erlaubten Streckenkorridors 12 um die Streckennachbildung 1' verläßt, ohne daß eine solche Abweichung von der geplanten Strecke 1 rasch erkannt wird.

Typischerweise ersteckt sich der erlaubten Streckenkorridor 12 vom angegebenen Streckenstart bis zum angegebenen Streckenziel. Jedoch kann der erlaubte Streckenkorridor auf einen ausgewählten berechneten Streckenabschnitt beschränken. Durch eine zusätzliche, zeitliche Einschränkung des erlaubten Aufenthaltorts der Streckenüberwachungseinheit 2, wie oben beschrieben, kann der erlaubte Streckenkorridor 12 in seiner Länge dynamisch gekappt werden. D. h. die Länge des erlaubten Streckenkorridors 12 wird dynamisch unter Verwendung der gespeicherten Streckenzeitinformationen und/oder der aktuell bzw. bisher gemessenen Positionsdaten der Streckenüberwachungseinheit 2 aktualisiert und somit auf einen bestimmten aktuellen Streckenabschnitt beschränkt.

Der GPS-Empfänger 3 bestimmt die Position der Steckenüberwachungseinheit 2 bzw. die Position des die Streckenüberwachungseinheit 2 tragenden Trägers 8. Die so gewonnene Positionsinformationen werden im CPU 5 verarbeitet bzw. mit einer durch im Speicher 6 gespeicherten Streckendaten dargestellte Streckennachbildung 1' der geplante Strecke 1 verglichen. Ggf. findet, wie oben beschrieben, zu der räumlichen Überprüfung der Streckeneinhaltung auch eine Überprüfung der Streckeneinhaltung nach zeitlichen Maßstäben statt. Wird eine unzulässige Streckenabweichung von der Streckenüberwachungseinheit 2 festgestellt, wird eine entsprechende Meldung an die Zentrale 7 ausgestrahlt. Vorzugsweise geschieht die Meldung über den Sprachkanal des GSM-Netzes (GSM = "Global System for Mobile Communications", d.h. globales System für mobile Kommunikation), ein internationales Funktelefon- bzw. Datennetz.

Es ist weiterhin vorteilhaft, die Streckenüberwachungseinheit mit einem Empfänger auszustatten, der gleichfalls den Sprachkanal des GSM-Netzes verwendet, um einen dialogfähigen Sprachkanal zwischen dem Fahrerhäuschen und der Zentrale aufbauen zu können.

Vorzugsweise umfaßt die Streckenüberwachungseinheit als weitere Datenempfangsvorrichtung einen 433 MHz Funkmodem, über den aktuelle Streckendaten von einem an den jeweiligen Verladehöfen installierten Sender bzw. Datenverarbeitungsvorrichtung in den Speicher 6 geladen werden.

Die in der Beschreibung als Beispiele angegebenen Ausführungs- bzw. Anwendungsformen der Erfindung dienen lediglich als Beispiele dafür, was der Fachmann in dem jeweiligen Kontext als äquivalent versteht oder verstehen könnte und ggf. anstelle eines der aufgelisteten Beispiele verwenden könnte. Solche Äquivalente gehören somit ebenso zur Erfindung wie die explizit ausgeführten, unvollzähligen Beispiele.

## Patentansprüche

1. Mobile Streckenüberwachungseinheit (2) mit einem Datenspeicher (6) zum Speichern von vorbestimmten Streckendaten mit Toleranzdaten;
einem Positionsgeber (3) zur Positionsbestimmung der mobilen Streckenüberwachungseinheit (2);
einem Prozessor (5) zum Feststellen von evtl. Streckenabweichungen zwischen einem durch die Streckendaten definierten Streckenverlauf (1') und einer aktuellen Position der Streckenüberwachungseinheit (2); und
einem Sender (4), der im Falle einer Streckenabweichung eine Meldung an eine Zentrale (7) aussendet, **dadurch gekennzeichnet, dass**
die Streckendaten den Streckenverlauf (1') in Form von Koordinaten und zugeordneten Streckenvektoren abbilden und die Toleranzdaten als Werte zulässiger Abweichung in senkrechter Richtung des nächstliegenden Streckenvektors vorliegen, wobei die Länge der Streckenvektoren (1') und die Werte zulässiger Abweichung für alle Streckenvektoren in Abhängigkeit vom Streckenverlauf gewählt und an diesen angepasst sind.

2. Mobile Streckenüberwachungseinheit (2) nach Anspruch 1, **dadurch gekennzeichnet, daß** der Sender (4) über den Sprachkanal eines GSM-Netzes kommuniziert.

3. Mobile Streckenüberurachungseinheit (2) nach einem der vorhergehenden Ansprüche, **dadurch gekennzeichnet, daß** die mobile Streckenüherwachungseinheit (2) eine Datenempfangsvorrichtung bzw. -eingang zum Empfang der vorbestimmten Streckendaten umfaßt.

4. Mobile Streckenüberwachungseinheit (2) nach Anspruch 3, **dadurch gekennzeichnet, daß** die Datenempfangsvorrichtung ein Lesegerät ist, der Daten aus einem wechselbaren Speichermedium herauslesen kann.

5. Mobile Streckenüberwachungseinheit (2) nach Anspruch 3, **dadurch gekennzeichnet, daß** die Datenempfangsvorrichtung ein Empfänger ist, der über den Sprachkanal des GSM-Netzes kommuniziert.

6. Mobile Streckenüberwachungseinheit (2) nach einem der vorhergehenden Ansprüche, **dadurch gekennzeichnet, daß** der Positionsgeber (3) ein GPS-Empfänger (3) ist.

7. Mobile Streckenüberwachungseinheit (2) nach einem der vorhergehenden Ansprüche, **dadurch gekennzeichnet, daß** die gespeicherten Streckendaten jederzeit geändert werden können.

8. Streckenüberwachungssystem (2, 7) einschließlich einer mobilen Streckenüberwachungseinheit (2) nach einem der vorhergehenden Ansprüche, **dadurch gekennzeichnet, daß** das System (2, 7) eine Vorrichtung zur Aufbereitung der Streckendaten umfaßt.

9. Streckenüberwachungssystem (2, 7) einschließlich einer mobilen Streckenüberwachungseinheit (2) nach einem der Ansprüche 1-8 **dadurch gekennzeichnet, daß** das System (2, 7) einen dem Sender (4) zugeordneten Empfänger umfaßt.

## Claims

1. Mobile route monitoring unit (2) comprising a data store (6) for storing predefined route data with tolerance data;
a position sensor (3) which determines the position of the mobile route monitoring unit (2);
a processor (5) which determines possible deviations from a route (1') defined by the route data and a current position of the route monitoring unit (2); and
a transmitter (4) which, in the event of a deviation from the route, emits a message to a center (7),
**characterized in that**
the route data image the route (1') in the form of coordinates and associated route vectors, and the tolerance data is provided as values of permissible deviation in an orthogonal direction of the closest route vector, wherein the lengths of the route vectors (1') and the values of permissible deviation for all route vectors may be selected as a function of the route and are adapted to the latter.

2. Mobile route monitoring unit (2) according to claim 1, **characterized in that** the transmitter (4) communicates via the speech channel of a GSM network.

3. Mobile route monitoring unit (2) according to any one of the preceding claims, **characterized in that** the mobile route monitoring unit (2) includes a data reception device or input for receiving the predefined route data.

4. Mobile route monitoring unit (2) according to claim 3, **characterized in that** the data reception device is a reading device capable of reading data from a changeable storage medium.

5. Mobile route monitoring unit (2) according to claim 3, **characterized in that** the data reception device is a receiver communicating via the speech channel of a GSM network.

6. Mobile route monitoring unit (2) according to any one of the preceding claims, **characterized in that** the position sensor (3) is a GPS receiver (3).

7. Mobile route monitoring unit (2) according to any one of the preceding claims, **characterized in that** the stored route data may be modified at any point of time.

8. Route monitoring system (2, 7) including a mobile route monitoring unit (2) according to any one of the preceding claims, **characterized in that** the system (2, 7) includes a device for conditioning the route data.

9. Route monitoring system (2, 7) including a mobile route monitoring unit (2), according to any one of claims 1 - 8, **characterized in that** the system (2, 7) includes a receiver associated to the transmitter (4).

## Revendications

1. Unité mobile de contrôle d'itinéraire (2), comprenant une mémoire de données (6) pour stocker des données d'itinéraire prédéfinies avec des données de tolérances ; un capteur de position (3) pour déterminer la position de l'unité mobile de contrôle d'itinéraire (2) ; un processeur (5) pour détecter d'éventuelles écarts de parcours entre un tracé d'itinéraire (1') défini par les données d'itinéraire et une position actuelle de l'unité mobile de contrôle d'itinéraire (2) ; et un émetteur (4) qui, en cas d'écart de parcours, envoie un message vers une centrale (7), **caractérisée en ce que** les données d'itinéraire reproduisent le tracé de l'itinéraire (1') sous forme de coordonnées et de vecteurs de trajet associés et les données de tolérance sont des paramètres d'un écart admissible dans la direction perpendiculaire au vecteur de trajet le plus proche, la longueur des vecteurs de trajet (1') et les paramètres d'écart admissible pour tous les vecteurs de trajet étant sélectionnés en fonction du tracé de l'itinéraire et étant ajustés à celui-ci.

2. Unité mobile de contrôle d'itinéraire (2) selon la revendication 1, **caractérisée en ce que** l'émetteur (4) communique par l'intermédiaire du canal vocal d'un réseau GSM.

3. Unité mobile de contrôle d'itinéraire (2) selon l'une quelconque des revendications précédentes, **caractérisée en ce que** l'unité mobile de contrôle d'itinéraire (2) comprend un dispositif de réception des données, plus précisément une entrée de données, destiné à recevoir les données d'itinéraire prédéfinies.

4. Unité mobile de contrôle d'itinéraire (2) selon la revendication 3, **caractérisée en ce que** le dispositif de réception des données est un lecteur, qui peut lire des données dans un support de mémoire amovible.

5. Unité mobile de contrôle d'itinéraire (2) selon la revendication 3, **caractérisée en ce que** le dispositif de réception des données est un récepteur qui communique par l' intermédiaire du canal vocal d'un réseau GSM.

6. Unité mobile de contrôle d'itinéraire (2) selon l'une quelconque des revendications précédentes, **caractérisée en ce que** le capteur de position (3) est un récepteur GPS (3).

7. Unité mobile de contrôle d'itinéraire (2) selon l'une quelconque des revendications précédentes, **caractérisée en ce que** les données d'itinéraire stockées en mémoire peuvent être modifiées à tout moment.

8. Système de contrôle d'itinéraire (2, 7) incluant une unité mobile de contrôle d'itinéraire (2) selon l'une quelconque des revendications précédentes, **caractérisé en ce que** le système (2, 7) comprend un dispositif de préparation des données d'itinéraire.

9. Système de contrôle d'itinéraire (2, 7) incluant une unité mobile de contrôle d'itinéraire (2) selon l'une quelconque des revendications 1 à 8, **caractérisé en ce que** le système (2, 7) comprend un récepteur associé à l'émetteur (4).
